(19) Europäisches Patentamt
European Patent Office
Office européen des brevets

(11) Numéro de publication: **0 421 894 A1**

(12) **DEMANDE DE BREVET EUROPEEN**

(21) Numéro de dépôt: **90420418.7**

(22) Date de dépôt: **26.09.90**

(51) Int. Cl.5: **C08G 77/392**, C08G 77/48, C08G 77/442, C08F 283/12

(30) Priorité: **02.10.89 FR 8913056**

(43) Date de publication de la demande: **10.04.91 Bulletin 91/15**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Clouet, Gilbert**
**6 rue des Jardins**
**F-67610 La Wantzenau(FR)**

(74) Mandataire: **Trolliet, Maurice et al**
**RHONE-POULENC CHIMIE Service Brevets Chimie Centre de Recherches des Carrières**
**B.P. 62**
**F-69192 Saint-Fons Cédex(FR)**

# (54) Disulfure de thiurame greffé polydiorganosiloxane et son utilisation lors de la polymérisation radicalaire de monomères vinyliques.

(57) La présente invention concerne un disulfure de thiurame greffé polydiorganosiloxane et son utilisation lors de la polymérisation radiculaire de monomères vinyliques en vue d'obtenir un copolymère tribloc polydiorganosiloxane/polymère vinylique/polydiorganosiloxane aux propriétés physiques améliorées.

EP 0 421 894 A1

## DISULFURE DE THIURAME GREFFE POLYDIORGANOSILOXANE ET SON UTILISATION LORS DE LA POLYMERISATION RADICALALIRE DE MONOMERES VINYLIQUES

La présente invention concerne un disulfure de thiurame greffé polydiorganosiloxane, son procédé de préparation et son utilisation lors de la polymérisation radicalaire de monomères vinyliques.

Dans la revue MAKROMOL.CHEM.RAPID.COMMUN. 3 , 127-132 (1982) on décrit l'utilisation de tétraalkylthiurame comme additif lors de la polymérisation radicalaire de monomères vinyliques, ledit additif étant dénommé "iniferter" car il présente lors de cette polymérisation la triple fonction d'initiateur de radicaux libres, d'agent de transfert de chaîne et d'agent bloqueur de chaîne.

US-A-2 813 846 enseigne l'utilisation entre autre de disulfure de tétraalkylthiurame comme initiateurs thermiques de polymérisation d'acrylonitrile, de méthacrylonitrile, de styrène et de méthacrylates d'alkyle.

EP-A-237 792 enseigne un procédé de préparation de polymères telechelics par polymérisation radicalaire de monomères éthyléniques en présence de dérivés de disulfure de thiurame ou de dérivés de dithiocarbamate présentant au moins groupe fonctionnel organique réactif.

Les procédés décrits dans la littérature citée ci-dessus ne permettent pas d'obtenir un copolymère tribloc polydiorganosiloxane/polymère vinylique/polydiorganosiloxane au moyen d'un procédé de polymérisation radicalaire de monomères vinyliques, ce qui constitue prècisément le but principal de la présente invention.

En effet, il est bien connu que les pclydiorganosiloxanes, malgré leurs propriétés physicochimiques particulièrement intéressantes, doivent présenter des poids moléculaires particulièrement élevés pour posséder les propriétés mécaniques convenables. Toutefois, même après réticulation, les polymères non chargés, présentent une résistance à la rupture, une résistance a la déchirure et une élongation plutôt médiocres. Une solution consiste à proposer un copolymère à bloc ou séquencé présentant des segments polydiorganosiloxane et des segments polymères cristallins ou semicristallins.

La difficulté majeure est alors de trouver un procédé industriel permettant d'obtenir un tel copolymère.

Après de longues et coûteuses recherches, le Demanderesse a trouvé de nouveaux disulfures de thiurame greffés polydiorganosiloxane qui permettent précisément d'atteindre le but ci-dessus.

La présente invention concerne donc un disulfure de thiurame greffé polydiorganosiloxane de formule :

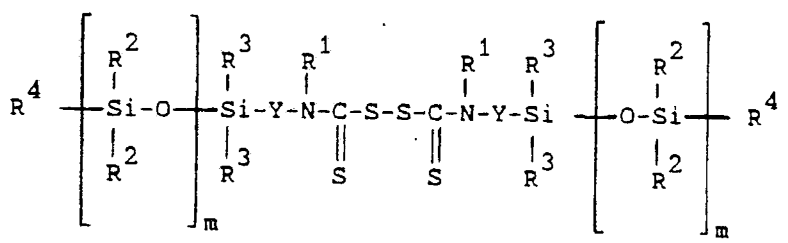
(1)

dans laquelle :

- les symboles $R^1$, identiques ou différents, représentent : un radical organique monovalent choisi parmi :
. un radical alkyle en $C_1$-$C_{12}$, linéaire ou ramifié éventuellement interrompu par un hétéroatome choisi parmi 0 et N et éventuellement substitué par un groupe amine tertiaire,
. un radical cycloalkyle en $C_3$ - $C_8$,
. un groupe aryle, aralkyle et alkylaryle,
- les symboles Y, identiques ou différents, sont des radicaux organiques divalents liés à l'atome de silicium par une liaison Si-C,
- les symboles $R^2$, identiques ou différents, représentent des radicaux hydrocarbonés monovalents choisis parmi :
. un radical alkyle en $C_1$-$C_{12}$ linéaire ou ramifié,
. le radical trifluoro-3,3,3,propyle,
. le radical phényle,
- les symboles $R^3$, identiques ou différents, sont choisis parmi les radicaux $R^2$ et un radical alcoxy ayant de 1 à 8 atomes de carbone,
- les symboles $R^4$, identiques ou différents sont choisis parmi les radicaux $R^3$ et un radical hydroxyle,
- m est un nombre entier compris entre 1 et 500, de préférence entre 2 et 200.

Le produit de formule (1) peut être préparé par réaction d'un polydiorganosiloxane de formule :

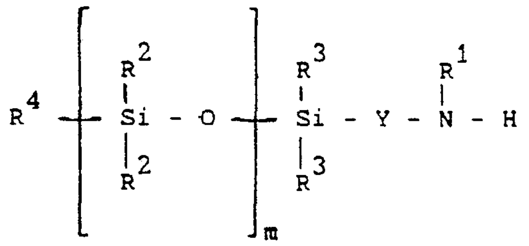

(2)

dans laquelle $R^1$, $R^2$, $R^3$, y et m ont la signification donnée à la formule (1) ci-dessus, sur le disulfure de carbone, en présence d'un agent oxydant tel que l'iode moléculaire et d'une amine tertiaire.

Comme amine tertiaire on peut utiliser par exemple la triéthylamine et la pyridine.

On recommande d'effectuer la réaction en opérant suivant un rapport molaire du polymère (2) à $CS_2$, de préférence légèrement supérieur à 1 et en présence d'au moins une mole d'amine tertiaire par mole de polymère (2).

La réaction est exothermique. On peut en contrôler l'exothermicité par les moyens habituels.

La réaction peut être effectuée en milieu solvant ou en masse. Dans ce dernier cas $CS_2$ peut jouer le rôle de solvant.

Le polydiorganosiloxane (2) peut être en particulier préparé selon l'un des deux procédés suivants :

- selon un premier procédé où $R^3$ est identique à $R^2$ on fait réagir un s-hydrogénopolydiorganosiloxane de formule :

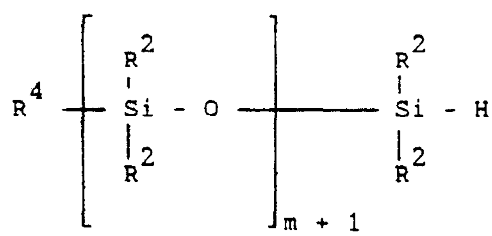

(3)

sur un composé organique à fonction amine secondaire et à insaturation oléfinique de formule :

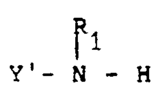

(4)

en présence d'une quantité catalytiquement efficace d'un catalyseur à base de platine ou à base d'un métal du groupe du platine (rhodium, osmium, rhénium, etc ....).

Dans les formules (3) et (4) : les symboles $R^1$, $R^2$ et $R^4$ et m ont la même signification que ci-dessus, Y′ est identique à Y sauf qu'il présente en outre une insaturation oléfinique.

Les catalyseurs au platine utilisés pour réaliser la réaction d'hydrosilylation des polymères de formule (3) sur le composé organique de formule (4) sont amplement décrits dans la littérature, on peut en particulier citer l'acide chloroplatinique $H_2PtCl_6$, les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 377 432 et US-A-3 814 730.

Pour faire réagir le polymère à SiH de formule (3) sur le composé de formule (4) on utilise généralement une quantité de catalyseur au platine calculée en poids de platine métal comprise entre 5 et 600 ppm, de préférence entre 10 et 200 ppm basés sur le poids de polymère à SiH de formule (3).

La réaction d'hydrosilylation peut avoir lieu en masse ou au sein d'un solvant organique volatil tel que le toluène, l'heptane, le xylène, le tétrahydrofuranne et le tétrachloroéthylène.

Cette réaction est effectuée de préférence en absence de tout solvant aprotique (eau et alcool par exemple).

Il est généralement souhaitable de chauffer le mélange réactionnel à une température comprise entre 60 et 120 °C pendant le temps nécessaire pour que la réaction soit complète. Par ailleurs il est souhaitable

d'ajouter goutte-à-goutte le polymère à SiH sur le composé de formule (4) éventuellement en solution dans un solvant organique.

On vérifie que la réaction est complète en dosant les SiH résiduels par la potasse alcoolique puis on élimine le solvant par exemple par distillation sous pression réduite.

Le polymère fonctionnalisé obtenu de formule (2) peut être purifié, par exemple par passage sur une colonne absorbante de silice.

Comme composé de formule (4) on recommande d'utiliser les N-(monosubstitués)allylamines de formule :

$CH_2 = CH - CH_2 - NHR_1$

ou $R^1$ représente de préférence les radicaux méthyle, éthyle, propyle, phényle et cyclohexyle.

Selon un deuxième procédé où $R^3$ peut désigner en outre un groupe hydrolysable choisi parmi les radicaux alcoxy ayant de 1 à 8 atomes de carbone, on fait réagir un ω-hydroxypolydiorganosiloxane de formule :

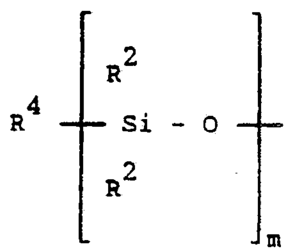

(3)

sur un aminotrialcoxysilane de formule :

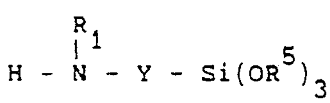

(6)

dans lesquelles les symboles $R^1$, $R^2$, m ont la signification donnée ci-dessus et les radicaux $R^5$, identiques ou différents, représentent un radical alkyle ou alcoxyalkyle en $C_1$-$C_8$, de préférence $R^5$ est méthyle ou éthyle.

La réaction de condensation entre le polymère (5) et le silane (6) s'effectue à une température comprise entre 40 et 140 °C, de préférence en milieu solvant, pendant une période de temps suffisante pour éliminer la quantité d'alcool $R^5OH$ engendré. Des silanes de formule (6) utilisables sont en particulier décrits dans les brevets US-A-3 888 815, US-A-4 481 364 et US-A-4 556 722 cités comme référence.

Parmi les silanes de formule (6) on peut en particulier utiliser les silanes de formules :

$(CH_3O)_3Si(CH_2)_3NHCH_3$

$(CH_3O)_3Si(CH_2)_3NH$ 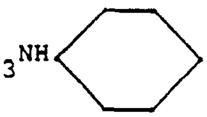

$(C_2H_5O)_3Si(CH_2)_3NHCH_3$

$(CH_3O)_3Si(CH_2)_3NH(CH_2)_2NH_2$

$(C_2H_5O)_3Si(CH_2)_3NH(CH_2)_2NH_2$

$(CH_3O)_3Si(CH_2)_4NHCH_3$

$(CH_3O)_3Si(CH_2)_3-S-(CH_2)_2NHC_2H_5$

$(CH_3O)_3Si(CH_2)_3-O-(CH_2)_2NHCH_3$

$(CH_3O)_3Si(CH_2)_3NH(CH_2)_2-S-CH_3$

Dans les formules (1) à (6) ci-dessus des exemples de radicaux $R^1$ sont méthyle, éthyle, propyle, butyle, éthyl-2 hexyle, n-octyle, dodécyle, cyclopentyle, cyclobutyle, phényle, benzyle et tolyle.

Y est de préférence un chaînon alkylène linéaire ou ramifié en $C_1$-$C_8$, de préférence en $C_3$-$C_8$, éventuellement interrompu par un hétéroatome choisi parmi O et S.

Comme exemples de chaînons Y on peut citer :

$-CH_2-$, $-(CH_2)_2-$, $-(CH_2)_3-$, $CH_2-CH(CH_3)-CH_2-$, $-(CH_2)_3-O-(CH_2)_2-$, $-(CH_2)_3-S-(CH_2)_2-$, $-(CH_2)_{12}-$.

Les exemples de radicaux alkyle pour $R^2$ sont les mêmes que ceux donnés pour $R^1$ , de préférence $R^1$ est choisi parmi méthyle et phényle. Par conséquent le segment diorganopolysiloxane comporte principalement des motifs choisis parmi diméthylsiloxy, méthylphénylsiloxy et diphénylsiloxy.

De préférence au moins 50 % en nombre des radicaux $R^2$ sont méthyle.

La présente invention a également pour objet l'utilisation du produit de formule (1) comme agent "macroiniferter" lors de la polymérisation radicalaire de monomères vinyliques.

Le produit de formule (1) est appelé "macroiniferter " car la présente invention a permis de mettre en évidence que ce polymère présente la triple fonction d'initiateur de polymérisation, d'agent de transfert de chaîne et d'agent de terminaison de chaîne, lors de la polymérisation radicalaire de monomères vinyliques.

Comme monomères vinyliques utilisables on peut notamment citer :

- les monomères acryliques et méthacryliques choisis plus particulièrement parmi les acrylates et les méthacrylates d'alkyle en $C_1$-$C_{12}$ tels que le méthacrylate de méthyle, le méthacrylate d'éthyle, le méthacrylate d'isopropyle, le méthacrylate de n-butyle,
- les monomères acryliques et méthacryliques porteurs d'au moins un groupe hydroxyle tels que le méthacrylate d'hydroxyéthyle, le méthacrylate d'hydroxypropyle, le méthacrylate de diéthylèneglycol, le méthacrylate de dipropylèneglycol, le méthacrylate de triéthylèneglycol et les acrylates correspondants,
- les monomères acrylamides et méthacrylamides. - les monomères styrènes tels que le styrène, l'α-méthylstyrène, le tert-butyl-styréne et le vinyltoluène.

Sans vouloir limiter l'invention à une théorie scientifique, la réaction radicalaire est supposée s'effectuer suivant le schéma réactionnel suivant :

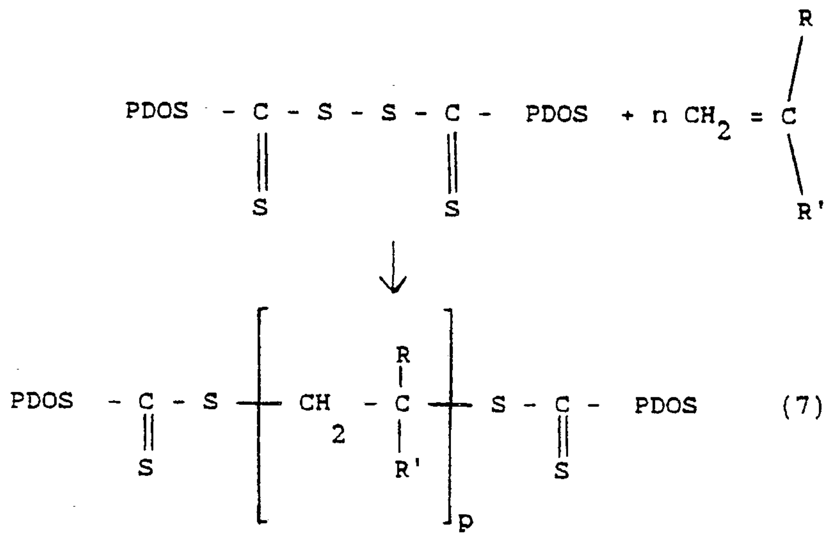

(7)

PDOS signifie bloc polydiorganosiloxane.

Dans la formule (7), p indique le degré de polymérisation du monomère vinylique et p est compris entre 50 et 1 000, de préférence entre 50 et 300.

La réaction de polymérisation est effectuée à une température de 50-160 ° C, de préférence 60-90 ° C.

Elle est effectuée de préférence en masse dans le cas où le "macroiniferter" est soluble dans le monomère vinylique comme par exemple dans le cas du styrène et du méthacrylate de méthyle. Dans le cas contraire, comme par exemple pour l'acrylamide, on utilise un solvant comme par exemple THF (tétrahydrofuranne).

Au cours de la polymérisation radicalaire, le bloc polyvinylique s'insère entre les deux soufres du groupe thiurame. Le poids moléculaire des blocs polyvinyliques dépend du rapport molaire/monomère vinylique/"macroiniferter".

La quantité de "macroiniferter" introduite est comprise généralement entre 1 et 50 parties en poids, de préférence de 2 à 20 parties, pour 100 parties en poids de monomère vinylique. Quand la quantité de "macroiniferter" introduite est importante, la vitesse de polymérisation décroît, le "macroiniferter" jouant alors principalement le rôle d'agent de terminaison des radicaux polymères.

Par ailleurs, au moment de la polymérisation, on peut ajouter un agent oxydant tel qu'$I_2$ au mélange réactionnel formé de monomeres vinyliques, du polymère de formule (2), de $CS_2$ et de l'amine tertiaire en vue d'obtenir in-situ un système oxydo-réducteur permettant d'abaisser la température de décomposition du copolymère diorganopolysiloxane/disulfure de thiurame.

Le copolymère tribloc diorganopolysiloxane/polyvinylique présente toujours des extrémités de chaînes qui sont des blocs diorganopolysiloxanes.

Cette structure tribloc est donc du type PA - PB - PA, où PA est une séquence polydiorganosiloxane et PB est une séquence vinylique, PA étant issu du macroiniferter de formule (1).

Le procédé de copolymérisation par voie radicalaire selon l'invention constitue donc une nouvelle voie pour synthétiser les copolymères de structure chimique bien définie et thermiquement stable jusqu'à une température de 200 ° C et même au-delà.

- EXEMPLE 1 :

Exemple 1.a. : synthèse d'un ω(N-méthylaminopropyl)polydiméthylsiloxane :

15 g d'un ω-SiH polydiméthylsiloxane (Mn masse moléculaire en nombre 3 400) bloqué α-triméthylsiloxyle sont dissous dans 50 ml de toluène et sont séchés par distillation azéotropique.

Ensuite sont ajoutés sous argon 0,75 ml de allyl-N-méthylamine contenant 7,5 mg d'$H_2PtCl_6$ dissous dans l'allyl-N-méthylamine.

Le mélange réactionnel est chauffé lentement sous agitation à 90 ° C pendant 90 mn et on porte

ensuite la température à 120 °C durant 1 heure et on maintient le mélange réactionnel à 120 °C pendant 12 heures. On élimine l'excès d'amine sous un vide partiel à cette température. On élimine le catalyseur par dissolution du mélange réactionnel dans l'heptane et lavage à l'eau. Après séchage sur $Na_2SO_4$, on élimine l'heptane sous vide partiel.

On vérifie que l'on obtient bien le polymère désiré par viscosimétrie et spectre RMN (résonnance magnétique nucléaire).

Exemple 1.b. : synthèse du macroiniferter :

14 g du produit obtenu à l'exemple 1.a. sont dissous dans 50 ml de $CHCl_3$. On ajoute 1 ml de triéthylamine et 0,5 g de $CS_2$. On fait réagir le mélange pendant une heure à température ambiante (25 °C). On ajoute alors goutte-à-goutte, sous agitation, une solution de $I_2$ dans $CHCl_3$ jusqu'à ce que la coloration violette persiste. La solution dans $CHCl_3$ ainsi obtenue est lavée à l'eau, séchée sur $Na_2SO_4$ pendant au moins 24 heures. $CHCl_3$ est éliminé par évaporation sous pression réduite à température ambiante. On récupère l'huile de façon quantitative dont la formule chimique ci-dessous est vérifiée par viscosimétrie et par analyses spectrales :

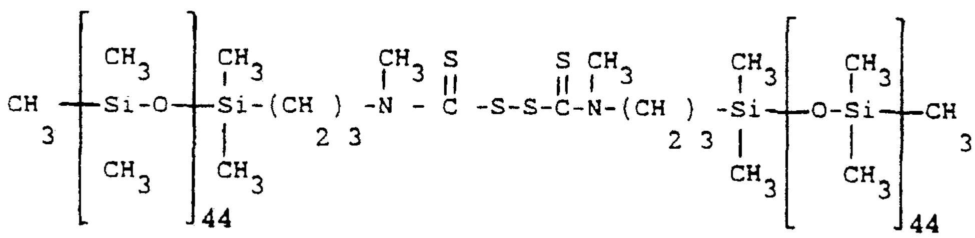

- EXEMPLES 2 A 13 :

Polymérisation radicalaire d'un monomère styrène (exemples 2 à 7) ou d'un monomère méthacrylate de méthyle (exemples 8 à 13) avec le "macroiniferter" de l'exemple 1.b.

Mode opératoire : on effectue les polymérisations dans un tuve de verre, sous une pression réduite de 0,133 KPa, scellé de 110 x 140 mm. Le "polyiniferter" étant soluble dans les monomères vinyliques on effectue la réaction en masse.

Le contenu du tube est désaéré par au moins trois cyles de congélation, de mise sous vide et de décongélation.

Le tube est ensuite scellé à une pression de 13,3 Pa.

Le tube est immédiatement enveloppé dans du papier aluminium et la polymérisation est conduite dans un bain d'huile à la température requise dans le temps désiré. Après la polymérisation, le tube est retiré, réfrigéré dans un mélange de glace sèche-isopropanol et le polymère, dilué avec du tétrahydrofuranne est précipité goutte-à-goutte dans le méthanol. Le précipité ou le produit résineux obtenu est recueilli dans un creuset en verre fritté, lavé à l'éther de pétrole, séché à 45 °C pendant toute une nuit et passé.

On a effectué diverses polymérisations de styrène (exemples 2 à 7) ou de méthacrylate de méthyle (exemples 8 à 13) en faisant varier la concentration ZCE en grammes de "macroiniferter" par 100 ml de monomère, la température (g) et le temps de polymérisation (t) en heures. Le copolymère obtenu est caractérisé par sa masse moléculaire moyenne en nombre Mn, sa masse moléculaire moyenne en poids Mw ; l'indice de polydispersité Ip = Mw : Mn ; fin le pourcentage en poids de polydiméthylsiloxane (D %) et TF le taux de conversion des monomères vinyliques obtenu en fin de réaction.

Les résultats obtenus sont rassemblés dans les tableaux 1 et 2 ci-après.

TABLEAU 1

| EX. | {C} | t | θ °C | Mn x $10^{-4}$ | IP | TF % | D % |
|---|---|---|---|---|---|---|---|
| 2 | 10 | 24 | 85 | 18,6 | 2,5 | 95 | 3,76 |
| 3 | 20 | 24 | 85 | 10,5 | 4,0 | 98 | 6,66 |
| 4 | 30 | 24 | 85 | 10,0 | 2,3 | 93 | 7,0 |
| 5 | 40 | 24 | 85 | 9,5 | 2 | 96 | 7,4 |
| 6 | 50 | 48 | 85 | 7,3 | 1,5 | 98 | 9,6 |
| 7 | 70 | 48 | 90 | 6,0 | 1,4 | 95 | 11,6 |

TABLEAU 2

| EX. | {C} | t | θ °C | Mn x $10^{-4}$ | IP | TF % | D % |
|---|---|---|---|---|---|---|---|
| 8 | 10 | 24 | 85 | 8,5 | 1,9 | 95 | 8,2 |
| 9 | 15 | 24 | 85 | 7,2 | 1,8 | 98 | 9,7 |
| 10 | 25 | 24 | 85 | 6,5 | 1,8 | 95 | 9,7 |
| 11 | 30 | 24 | 85 | 5,7 | 1,9 | 98 | 10,7 |
| 12 | 50 | 48 | 85 | 4,31 | 1,4 | 98 | 12,3 |
| 13 | 70 | 48 | 90 | 3,9 | 1,4 | 95 | 17,9 |

## Revendications

1. - Disulfure de thiurame greffé polydiorganosiloxane de formule :

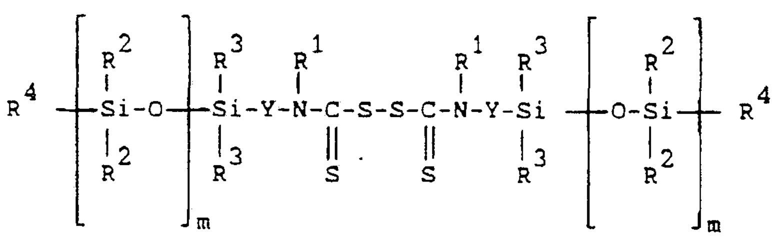

(1)

dans laquelle :

- les symboles $R^1$, identiques ou différents, représentent : un radical organique monovalent choisi parmi :

. un radical alkyle en $C_1$-$C_{12}$, linéaire ou ramifié éventuellement interrompu par un hétéroatome choisi parmi O et N et éventuellement substitué par un groupe amine tertiaire,

. un radical cycloalkyle en $C_3$-$C_8$,

. un groupe aryle, aralkyle et alkylaryle,

- les symboles Y, identiques ou différents, sont des radicaux organiques divalents liés à l'atome de silicium par une liaison Si-C,

- les symboles $R^2$, identiques ou différents, représentent des radicaux hydrocarbonés monovalents choisis parmi :

. un radical alkyle en $C_1$-$C_{12}$ linéaire ou ramifié,
. le radical trifluoro-3,3,3,propyle,
. le radical phényle,
- les symboles $R^3$, identiques ou différents, sont choisis parmi les radicaux $R^2$ et un radical alcoxy ayant de 1 à 8 atomes de carbone,
- les symboles $R^4$, identiques ou différents sont choisis parmi les radicaux $R^3$ et un radical hydroxyle,
- m est un nombre entier compris entre 1 et 500, de préférence entre 2 et 200.

2. - Disulfure de thiurame selon la revendication 1, caractérisé en ce que $R^1$ est méthyle au cyclohexyle, $R^2$ est méthyle et/ou phényle, Y est $-(CH_2)_3-$ et $R^3$ est méthyle ou alcoxy en $C_1$-$C_8$.

3. - Procédé de préparation d'un disulfure de thiurame tel que défini à la revendication 1 ou 2 par réaction d'un polydiorganosiloxane de formule :

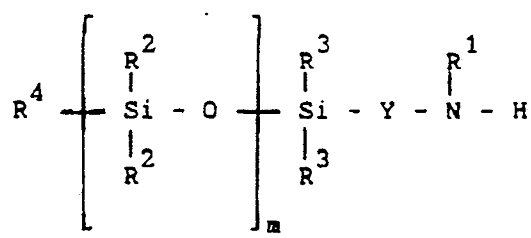

(2)

dans laquelle $R^1$, $R^2$, $R^3$, Y et m ont la signification donnée à la formule (1) ci-dessus, sur le disulfure de carbone, en présence d'un agent oxydant et d'une amine tertiaire.

4. - Procédé selon la revendication 3, caractérisé en ce que l'agent oxydant est l'iode et l'amine tertiaire est la triéthylamine.

5. - Utilisation d'un disulfure de thiurame tel que défini à la revendication 1 ou 2, comme agent ayant la triple fonction d'initiateur d'agent de transfert de chaîne et d'agent bloqueur de chaîne lors de la polymérisation radicalaire de monomères vinyliques.

6. - Utilisation selon la revendication 5, caractérisée en ce que le monomère vinylique est un monomère acrylique, méthacrylique, acrylamide, méthacrylamide ou styrène.

Office européen des brevets

# RAPPORT DE RECHERCHE EUROPEENNE

Numero de la demande

EP 90 42 0418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 584 356 (J.V. CRIVELLO) * le document en entier * | 1-6 | C 08 G 77/392<br>C 08 G 77/48<br>C 08 G 77/442<br>C 08 F 283/12 |
| A | POLYMER vol. 29, octobre 1988, pages 1909-1917; C.P. REGHUNADHAN NAIR et al.: "Functionalization of vinyl polymers through polymeric iniferters: synthesis of poly(methylmethacrylate-b-phosphonamide) and poly(styrene-b-phosphonamide)" * page 1910, colonne 2, paragraphe 2; page 1911; page 1917, colonne 1, paragraphe 2 * | 1,3-6 | |
| A | US-A-4 113 696 (T.C. WILLIAMS et al.) * colonne 9; exemple 3 * | 1,3 | |
| A | JOURNAL OF APPLIED POLYMER SCIENCE vol. 29, no. 3, mars 1984, pages 877-889, New York, US; H. INOUE et al.: "Surface Photografting of Hydrophilic Vinyl Monomers onto Diethyldithiocarbamated Polydimethylsiloxane" * page 877 * | 1,5 | |

| DOMAINES TECHNIQUES RECHERCHES (Int. Cl.5) |
|---|
| C 08 F<br>C 08 G |

Le présent rapport a été établi pour toutes les revendications

| Lieu de la recherche | Date d'achèvement de la recherche | Examinateur |
|---|---|---|
| BERLIN | 20-12-1990 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant